Europäisches Patentamt

European Patent Office

Office européen des brevets

(11) Publication number: **0 291 639**
**A1**

## EUROPEAN PATENT APPLICATION

(21) Application number: 88102450.9

(22) Date of filing: 19.02.88

(51) Int. Cl.4: **F16L 11/08**

The title of the invention has been amended (Guidelines for Examination in the EPO, A-III, 7.3).

(30) Priority: 25.02.87 US 18923

(43) Date of publication of application:
**23.11.88 Bulletin 88/47**

(84) Designated Contracting States:
AT BE CH DE ES FR GB GR IT LI LU NL SE

(71) Applicant: **PHILLIPS PETROLEUM COMPANY**
**5th and Keeler**
**Bartlesville Oklahoma 74004(US)**

(72) Inventor: **O'Connor, James Edward**
**5908 SE Martin Pl**
**Bartlesville, OK 74006(US)**

(74) Representative: **Geissler, Bernhard, Dr.**
**Patent- und Rechtsanwälte et al**
**Bardehle-Pagenberg-Dost-**
**Altenburg-Frohwitter & Partner Postfach 86**
**06 20**
**D-8000 München 86(DE)**

(54) **Thermoplastic composite pipe tube with resin rich inner portion and method of manufacturing the same.**

(57) A thermoplastic composite pipe (10) having a resin rich inner portion and method of forming same. The pipe is formed by wrapping an inner layer (14) of thermoplastic material on a mandrel (12) and overwrapping the inner layer with an outer layer (16) of reinforced composite material. Preferably, the outer layer (16) is wrapped at a temperature greater than the melting point of the thermoplastic material of the inner layer (14). Heat is applied to the composite structure (10) while still on the mandrel (12) such that the mandrel expands and applies internal pressure on the inner layer forming a smooth internal surface thereof. Filler materials may be added to the inner layer (14) for providing additional reinforcing and for reducing the coefficient of friction along the inner surface of the pipe.

FIG. 1

## THERMOPLASTIC COMPOSITE PIPE TUBE WITH RESIN RICH INNER PORTION AND METHOD

### Background of the Invention

#### 1. Field Of The Invention

This invention relates to thermoplastic composite pipes, and more particularly, to a composite pipe with a resin rich inner portion having a smooth internal surface and a method of forming such a pipe.

#### 2. Description of the Prior Art

Plastic composite pipes have been developed for use in handling corrosive fluids. The pipes are made of materials which are chemically compatible with those fluids and not attacked thereby. Thermoplastics which have been used for handling corrosive fluids include nylon, polypropylene, polyethylene, polyester, polyetherether ketone, and the family of aromatic sulfide polymers. One member of the latter group is polyphenylene sulfide (PPS), available under the trademark RYTON® by the assignee of the present invention. In order to provide adequate strength for the pipes, the plastic material frequently includes a fiber reinforcing material molded therein. Such reinforcing materials include glass, carbon, aramid (aromatic polyamide) or mixtures thereof.

A problem with many fiber reinforced thermoplastic pipes is that fibers are present at the inner surface of the pipe which results in some surface pits and roughness. Further, moisture from the fluid in the pipe will wick along the fibers, and thus migrate through the thermoplastic and eventually reach the outer surface of the pipe. Obviously, this is an undesirable situation, particularly with corrosive fluids. Therefore, it is desirable to have an inner surface where no fibers are present.

The most common solution is to wrap the exterior of an extruded liner with a reinforcing material. Examples of such processes are shown in U. S. Patent No. 4,104,095 to Shaw; 4,273,599 to Butt; and 4,495,018 to Vohrer. A problem with this type of pipe is that the extrusion process is complicated and expensive. Another problem with extruded liners is that the inner surface is not easily made smooth.

The present invention eliminates the extrusion problems, and instead includes wrapping a thermoplastic layer around a mandrel, wrapping a reinforced thermoplastic layer on top of the first layer at a temperature greater than the melting point of the thermoplastic. Further, none of the prior art discloses heating such a wound structure such that the mandrel expands and provides internal pressure on the pipe to form a smooth inner surface while at the same consolidating the pipe into a structure having a resin rich inner portion. Because no fibers are present at the inner surface, the wicking problem is eliminated.

A process of helically winding a strip of thermoplastic resin material on a mandrel and winding a fiber reinforced thermosetting resin on top of the thermoplastic is mentioned in U. S. Patent No. 4,011,354 to Drostholm et al. However, this patent does not address the problem of having a rough inner surface.

### Summary of the Invention

The composite pipe of the present invention comprises an inner layer formed by wrapping thermoplastic material on a mandrel for providing a resin rich inner portion of the pipe and an outer layer formed by wrapping fiber reinforced composite material on the inner layer for providing a reinforced outer portion of the pipe. Preferably, the outer layer is wrapped at a temperature above a melting point of the thermoplastic material in the inner layer such that the outer layer becomes integrally bonded with the inner layer. The outer layer comprises a thermoplastic material, preferably the same thermoplastic material as the inner layer, with a fiber reinforced material included in a continuous thermoplastic matrix.

The outer layer may be made in any one of a number of convenient forms usable for wrapping around the inner layer on the mandrel. In one embodiment, the material is a filament reinforced thermoplastic prepreg strip or ribbon. In another embodiment, the outer layer comprises thermoplastic material and reinforcing material each in the form of yarnlike strands forming a plurality of continuous individual filaments bundled together.

Nonfibrous filler material may be included in the inner layer to provide additional reinforcing and to reduce the coefficient of friction on the inner surface thereof.

The method of preparing the composite pipe comprises the steps of wrapping a first layer of thermoplastic material on the mandrel, wrapping a fiber reinforced thermoplastic material second layer on the first layer, and consolidating the thermoplastic material and the fiber for forming a structure with an outer portion in which a thermoplastic matrix surrounds the fiber and a resin rich inner portion absent of fibers.

The step of consolidating comprises applying sufficient heat and pressure to the pipe structure on the mandrel such that the thermoplastic matrix surrounds the fiber in the outer portion.

The method further comprises a step of applying sufficient heat to expand the mandrel for applying pressure to an inner surface of the first layer such that a smooth inner surface is formed. This heating step may be as part of the step of consolidating the thermoplastic material, or it may be a totally separate step in the process.

Wrapping the first and second layers may be done by any method known in the art. The first layer may be provided in the form of a thin film of thermoplastic material.

An important object of the invention is to provide a thermoplastic composite pipe with a resin rich inner portion.

Another object of the invention is to provide a thermoplastic composite pipe having a smooth internal surface.

A further object of the invention is to provide a method of forming a composite pipe by wrapping an inner layer of thermoplastic material on a mandrel and then wrapping an outer layer of fiber reinforced composite material on the inner layer.

Still another object of the invention is to provide a method of forming a composite pipe having a continuous thermoplastic structure with a resin rich inner portion and a fiber reinforced outer portion.

Additional objects and advantages of the invention will become apparent as the following detailed description of the preferred embodiment is read in conjunction with the drawings which illustrate such preferred embodiment.

## Brief Description of the Drawings

FIG. 1 schematically illustrates spiral winding inner and outer layers on a mandrel to form one embodiment of the composite pipe of the present invention.

FIG. 2 schematically illustrates the composite pipe formed on a mandrel, but using multiple opposing winding of the layers.

FIG. 3 is a cross-sectional view of the composite pipe as the layers are positioned on the mandrel.

FIG. 4 is a cross section showing the final, consolidated composite pipe structure of the present invention.

## Description of the Preferred Embodiment

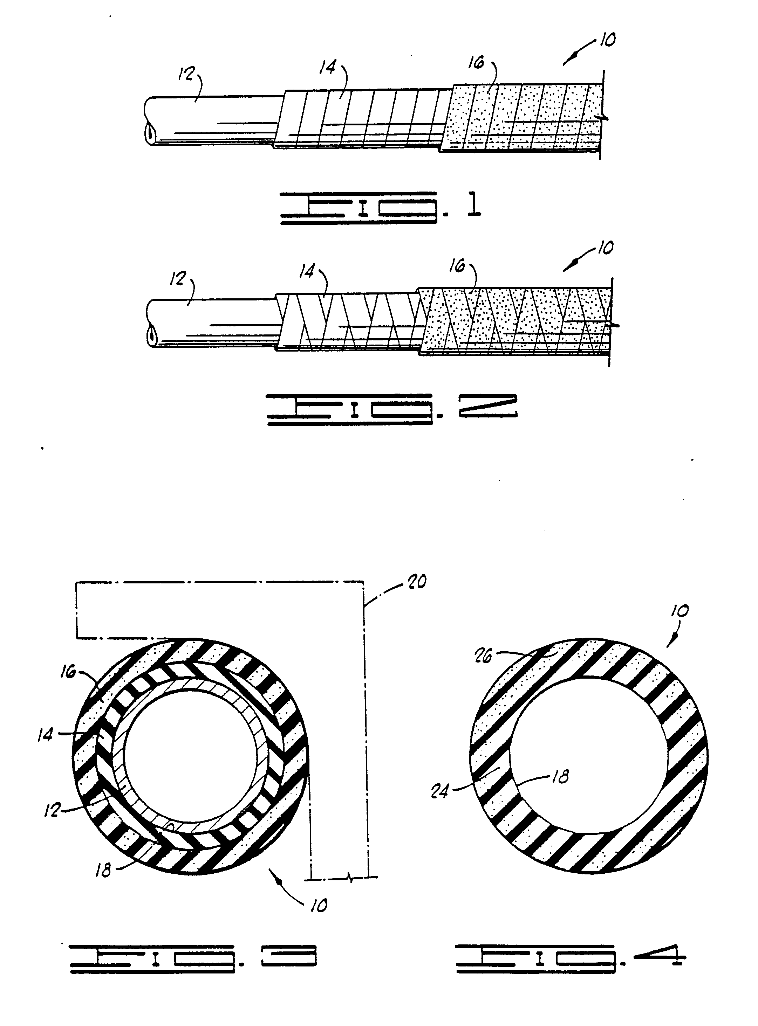

Referring now to the drawings, and more particularly to FIGS. 1 and 2, the general construction of the composite pipe of the present invention, generally designated by the numeral 10, is shown. Pipe 10 is formed by wrapping a mandrel 12 with a first, inner layer 14 of thermoplastic material, preferably in the form of a film. FIG. 1 illustrates one embodiment in which inner layer 14 is spirally wrapped on mandrel 12, and FIG. 2 illustrates another embodiment having multiple spiral windings of material, such as two layers at 90° to one another. While spiral winding has been illustrated for the purposes of this disclosure, the invention is not intended to be limited to such a winding configuration. For example, inner layer 14 could comprise a long sheet of material having edges parallel to the axis of mandrel 12 and wrapped therearound by hand or other means known in the art.

Inner layer 14 is preferably a thermoplastic material which has good corrosion resistant characteristics. The preferred thermoplastics are polyarylene sulfides which are a family of aromatic sulfide polymers having the general formula $(AR-X-AR-S)_n$. The aromatic unit may be mono- or polycyclic moiety and X may be selected from at least one of the groups $O$, $S$, $SO_2$, $CO$, $OCO$, $NCHO$, etc. In general, these polymers are noted for their excellent chemical resistance, good thermal stability and physical strength. One preferred member of that family is polyphenylene sulfide (PPS), available under the trademark RYTON® by the assignee of the present invention. Another preferred member of the polyarylene family is polyphenylene sulfide sulfone. Many other thermoplastic materials such as nylon, polypropylene, polyethylene, polyester, and polyetherether ketone and the like may also be utilized.

Inner layer 14 may be virgin material or may include some particulate reinforcing materials such as carbon black particles. Such particles do not present the wicking problem of fiber materials, nor do they cause pitting and roughness on the inner surface. Carbon black is a good reinforcing filler also because it is not attacked by most liquids.

To reduce the coefficient of friction in pipe 10, the material of which inner layer 14 is made may include materials such as tetrafluoroethylene polymer (TFE), which is identified by the trademark TEFLON® by DuPont, mixed in with it. Such a use of TFE or other friction reducing material, along with the smooth interior surface hereinafter described, insures a pipe 10 with minimal friction losses along the inner surface as fluid flows through the pipe.

A second, outer layer 16 is wrapped around inner layer 14. Outer layer 16 is a fiber reinforced composite to provide strength for pipe 10. As with inner layer 14, FIG. 1 shows outer layer 16 formed by a single layer of spirally wrapped material, and FIG. 2 shows multiple layers wrapped angularly disposed to one another. Again, the invention is not intended to be limited to these wrapping configurations.

In the preferred embodiment, outer layer 16 is formed of the same thermoplastic material, e.g., PPS, as inner layer 14, but further including a fiber reinforcing material. Suitable reinforcing materials include glass, carbon, and aramid (aromatic polyamide) fibers. Other reinforcing materials may also be used.

The reinforced composite material from which outer layer 16 is made may be any one of a number of convenient forms usable for wrapping around inner layer 14 on mandrel 12. One such material is a filament reinforced thermoplastic prepreg strip or ribbon. These prepreg strips comprise a thermoplastic matrix surrounding the reinforcing fibers and are disclosed in European Patent Application 125,472, published on November 21, 1984, a copy of which is incorporated herein by reference, and assigned to the assignee of the present invention.

Another method of forming outer layer 16 comprises winding a thermoplastic material and a reinforcing material, which are readily physically separable from each other, around inner layer 14. The thermoplastic material is in solid form when it is brought onto the mandrel. The thermoplastic material and reinforcing material are each preferably provided in the form of yarn-like strands comprising a plurality of continuous individual filaments bundled together. This yarn-like thermoplastic material and yarn-like reinforcing material may be provided in a number of forms as disclosed in copending U. S. Patent Application Serial No.944,243, filed December 19, 1986, of James E. O'Connor and Chin-Chi N. Ma, entitled FILAMENT WOUND COMPOSITE STRUCTURES, the details of which are incorporated herein by reference, and assigned to the assignee of the present invention. Any of the methods disclosed in this patent application are suitable for forming outer layer 16 of pipe 10.

In the preferred embodiment, the reinforced composite material of outer layer 16 is wound on inner layer 14 at a temperature above the melting point of the thermoplastic forming inner layer 14. Before outer layer 16 cools down, it will melt into the outer surface of inner layer 14, thus becoming internally bonded therewith. In this way, outer layer 16 and inner layer 14 are integrally bonded.

Some of the thermoplastic materials listed above, e.g., polyphenylene sulfide sulfone, polypropylene and polyester, are amorphous materials that do not have a distinct melting point. It will be understood that when the term "melt" is used in this disclosure in the context of such an amorphous material, that it is meant that the material is heated until it is sufficiently softened so that outer layer 16 is adhered to inner layer 14. Melting in the technical sense is not actually required.

The final step in completing preparation of pipe 10 is to heat the structure while still positioned on mandrel 12. The heating should be such that mandrel 12 expands within pipe 10 applying pressure to inner surface 18 of inner layer 14. Mandrel 12 preferably has a smooth outer surface and this expansion of the mandrel insures that inner surface 18 is smooth and free from pits and roughness. Such a smooth inner surface 18 obviously provides less fluid friction, and lower pressure drop, as fluid flows through pipe 10.

Heat and pressure are also necessary to consolidate the composite material forming outer layer 16 in order to form a substantially continuous thermoplastic matrix surrounding the individual filaments of reinforcing material. The term "consolidation" as used herein refers to the combination of heating to melt or soften the thermoplastic, and application of pressure to cause the softened thermoplastic to flow into the spaces between reinforcing filaments to form a continuous thermoplastic matrix.

One possible manner for the application of heat and pressure is to apply the heat and pressure to the thermoplastic and reinforcing material as it is wound upon inner layer 14 on mandrel 12 with a heated compacting device 20 as shown in FIG. 2. Such a compacting device 20 is disclosed in copending U. S. Patent Application Serial No. 923,872, filed October 28, 1986, of James E. O'Connor and John R. Bohannon, entitled COMPACTING FILAMENT WOUND THERMOPLASTIC STRUCTURES, the details of which are incorporated herein by reference, and assigned to the assignee of the present invention.

Depending upon the thicknesses of inner layer 14 and outer layer 16, compacting device 20 may not heat deeply enough in pipe 10 to cause mandrel 12 to expand. In such cases, heating of pipe 10 while still on mandrel 12 may be carried out in an oven of a kind known in the art. Heating in the oven may be in addition to, or as an alternative to, heating by compacting device 20. The expansion of mandrel 12 causes pressure on inner surface 18 as already described, which can also help consolidate the thermoplastic and reinforcing material of outer layer 16.

After the heating process and a cool down period afterwards, pipe 10 may be removed from mandrel 12. FIG. 4 illustrates a cross section of the completed pipe 10 which has a continuous thermoplastic structure with a resin rich inner portion 24 having a smooth inner surface 18, and a fiber reinforced outer portion 26, extending around resin rich inner portion 24. Inner portion 24 generally corresponds to original inner layer 14, and outer portion 26 generally corresponds to original outer layer 16.

Because none of the fibers in outer portion 26 extend to inner surface 18, no wicking problems will occur. However, pipe 10 still has the strength of a reinforced structure because of the fibers in outer portion 26.

As already indicated, inner portion 24 may be reinforced by inclusion of particulate material such as carbon black which has no wicking problems and further modified by the addition of a material such as TFE to reduce the coefficient of friction along inner surface 18. The result is a strong composite pipe 10 having good fluid flow and low pressure drop characteristics and which is well adapted for handling corrosive fluids.

Two examples of the fabrication of a pipe according to the present invention will now be illustrated. Both examples relate to winding outer layer 16 in the yarn-like form described above.

Example 1

One layer of .003-inch thick RYTON® PPS film was wrapped around a 6.26-inch diameter round steel mandrel. No heat was applied during the film-wrapping process. The film was held in place with tape to prevent slippage on the mandrel. Four strands of Owens-Corning Fiberglass glass fibers were impregnated with RYTON® PPS in a slurry process to form a 1/2-inch wide glass fiber PPS band. The band was formed in a heated metal die at 315° C. and contained 63.5% by weight of glass fiber. The band was pulled onto the mandrel and overwrapped on the previously wrapped layer of PPS film. Eight layers of the glass fiber reinforced PPS composite material were wrapped onto the mandrel in this manner. The mandrel containing the film layer and the composite layer was then heated in an oven for two hours at 300° C. After cooling, the mandrel was extracted from the winding. The result was a fiber reinforced composite pipe with a smooth interior resin rich surface.

Example 2

One layer of .003-inch thick RYTON® PPS film containing one percent by weight of carbon black was wrapped around a 6.25-inch diameter round steel mandrel. No heat was applied during the film-wrapping process. The film was held in place with tape to prevent slippage on the mandrel. Four strands of Owens-Corning Fiberglas glass fibers were impregnated with RYTON® PPS in a slurry process to form a 1/2-inch wide glass fiber PPS band. The band was formed in a heated metal die at 315° C. and contained 63.5% by weight of glass fiber. The band was pulled onto the mandrel and overwrapped on the previously wrapped layer of PPS film. Eight layers of the glass fiber reinforced PPS composite material were wrapped onto the mandrel in this manner. The mandrel containing the film layer and the composite layer was then heated in an oven for two hours at 300° C. After cooling, the mandrel was extracted from the winding. The result was a fiber reinforced composite pipe with a smooth interior resin rich surface.

It can be seen, therefore, that the thermoplastic composite pipe tube with smooth, resin rich inner surface of the present invention and the methods of preparation thereof are well adapted to carry out the ends and advantages mentioned as well as those inherent therein. While presently preferred embodiments of the structure and methods of preparation have been disclosed for the purposes of this disclosure, numerous changes in the arrangement and construction of parts and numerous changes in the order and implementation of the various steps may be made by those skilled in the art. All such changes are encompassed within the scope and spirit of the appended claims.

**Claims**

1. A composite pipe comprising:
an inner layer formed by wrapping thermoplastic material on a mandrel for providing a resin rich inner portion of said pipe; and
an outer layer formed by wrapping fiber reinforced composite material on said inner layer for providing a reinforced outer portion of said pipe, said outer layer being wrapped at a temperature above a melting point of said thermoplastic material such that said outer layer becomes integrally bonded with said inner layer.

2. The pipe of claim 1 wherein said thermoplastic material comprises a filler material therein.

3. The pipe of claim 2 wherein said filler material is at least one of a group comprising carbon black particles and polytetrafluoroethylene polymer.

4. The pipe of claim 1 or 2 wherein said thermoplastic material is polyphenylene sulfide.

5. The pipe of any of the preceding claims wherein said composite material comprises fiber reinforced polyphenylene sulfide.

6. The pipe of any of the preceding claims wherein said outer layer comprises prepreg ribbon.

7. The pipe of any of claims 1-5 wherein said outer layer comprises thermoplastic material and reinforcing material each in the form of yarn-like strands forming a plurality of continuous individual filaments bundled together.

8. The pipe of any of claims 1-6 wherein said fiber is at least one of a group comprising glass, carbon and aramid.

9. A method of preparing a composite pipe, said method comprising the steps of:

wrapping a first layer of thermoplastic material on a mandrel;

wrapping a fiber reinforced thermoplastic material second layer on said first layer; and

consolidating said thermoplastic material and said fiber for forming a structure with an outer portion in which a thermoplastic matrix surrounds said fiber and a resin rich inner portion absent of fibers.

10. The method of claim 9 further comprising a step of applying sufficient heat to expand said mandrel for applying pressure to an inner surface of said first layer.

11. The method of claim 9 or 10 further comprising the step of heating said second layer to a temperature above a melting point of said thermoplastic material in said first layer prior to said step of wrapping said second layer.

12. The method of any of claims 9-11 further comprising the step of providing said first layer in the form of a film of polyphenylene sulfide prior to said step of wrapping said first layer.

13. The method of any of claims 9-12 further comprising the step of adding a filler material of at least one of a group comprising carbon black particles and tetrafluoroethylene polymer to said thermoplastic material of said first layer prior to said step of wrapping said first layer.

14. The method of any of claims 9-13 further comprising the step of providing said fiber in said second layer from at least one of a group comprising glass, carbon and aramid prior to said step of wrapping said second layer.

15. A method of preparing a thermoplastic composite pipe on a mandrel, said method comprising the steps of:

wrapping a first layer of thermoplastic film on said mandrel;

wrapping a second layer of fiber reinforced composite on said first layer; and

heating said first and second layers on said mandrel such that said mandrel expands, thereby applying internal pressure to said first layer for providing a smooth inner surface thereof.

16. The method of claim 15 further comprising the step of heating said second layer to a temperature greater than a melting point of said first layer prior to said step of wrapping said second layer, whereby said second layer is integrally bonded with said first layer.

17. The method of claim 15 or 16 further comprising a step of providing said thermoplastic film of said first layer from polyphenylene sulfide prior to said step of wrapping said first layer.

18. The method of any of claims 15-17 further comprising the step of providing said second layer from the same thermoplastic material as said first layer and having a fiber reinforcing material included therein, prior to said step of wrapping said second layer.

19. The method of any of claims 15-18 further comprising the steps of:

providing a filler material of at least one of a group comprising carbon black particles and tetrafluoroethlene polymers; and

adding said filler material to said thermoplastic step prior to said step of wrapping said first layer.

20. The method of claim 15 or 18 further comprising the step of providing said fiber in said second layer of a material from at least one of a group comprising glass, carbon and aramid prior to said step of wrapping said second layer.

21. The method of claim 15 further comprising the step of providing said second layer in the form of a prepreg ribbon prior to said step of wrapping said second layer.

22. The method of claim 15 further comprising the step of providing said second layer in the form of a reinforcing material wound together with a solid form of thermoplastic material to form a wound structure.

FIG. 1

FIG. 2

FIG. 3

FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | GB-A-1 315 117 (ANGUS) <br> * claims 1-5 * | 1,7,9, 15 | F 16 L 11/08 |
| A | GB-A-2 065 262 (SNIA) <br> * page 1, lines 46-86; claims * | 1,2,7 | |
| A | US-A-4 106 967 (LOGAN et al.) <br> * figure 7 * | 1 | |
| A | US-A-4 121 962 (HOPKINS) | | |
| A | US-A-2 247 197 (GRAVES) | | |
| A | US-A-2 714 414 (GANAHL et al.) | | |
| A | US-A-3 296 047 (PARR) | | |
| A | EP-A-0 203 880 (GOODYEAR) | | |

|  |  |  | TECHNICAL FIELDS SEARCHED (Int. Cl.4) |
|---|---|---|---|
|  |  |  | B 29 C 47/00 <br> B 29 C 53/00 <br> F 16 L 9/00 <br> F 16 L 11/00 |

The present search report has been drawn up for all claims

| Place of search | Date of completion of the search | Examiner |
|---|---|---|
| BERLIN | 15-05-1988 | SCHAEFFLER C.A.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)